# EUROPÄISCHE PATENTSCHRIFT

(11) **EP 2 784 009 B1**
(45) Veröffentlichungstag und Bekanntmachung des Hinweises auf die Patenterteilung: **27.07.2016**
(21) Anmeldenummer: 14160688.9
(22) Anmeldetag: 19.03.2014
(51) Int. Cl.: B65G 47/82, B65G 47/90, B65G 9/00

(54) **Verfahren und Einrichtung zum Übergeben von Stückgüter an eine Förderanlage**
Method and device for transferring piece goods to a conveyor system
Procédé et dispositif de transfert de marchandises au détail au niveau d'une installation de transport

(30) Priorität: 28.03.2013 CH 6922013
(43) Veröffentlichungstag der Anmeldung: 01.10.2014
(73) Patentinhaber: Ferag AG, 8340 Hinwil (CH)
(72) Erfinder: Fenile, Roberto, 8623 Wetzikon (CH); Guhl, Simon, 8620 Wetzikon (CH)
(74) Vertreter: Frei Patent Attorneys

(56) Entgegenhaltungen:
- EP-A1- 2 394 915
- EP-A1- 2 495 193
- EP-A2- 1 717 533
- EP-A2- 2 292 402
- WO-A1-00/61470
- FR-A1- 2 086 265
- US-A- 3 987 889

## Beschreibung

Die Erfindung bezieht sich auf das Gebiet der Fördertechnik. Ein erster Aspekt betrifft ein schienengeführtes Fördermittel enthaltend einen Förderwagen mit mindestens einer ersten, zweiten und dritten Laufrolle zur rollenden Förderung entlang einer Schienenführung. Ferner betrifft die Erfindung eine Förderanlage enthaltend mindestens ein schienengeführtes Fördermittel sowie eine Schienenführung mit einem Schienenkörper.

Die Erfindung betrifft eine Einrichtung und ein Verfahren zur Übergabe von Stückgütern an eine Förderanlage, insbesondere der oben genannten Art. Die Förderanlage enthält mindestens ein entlang einer Förderstrecke bewegbares Förderorgan zum Halten und Fördern eines Stückgutes. Die Einrichtung enthält mindestens eine Stückgutaufnahme zum Positionieren und Bereitstellen eines Stückgutes in einer Übergabezone der Förderanlage.

Fördereinrichtungen mit schienengeführten Fördermitteln, welche über Laufrollen oder Gleitelemente entlang von Führungsschienen geführt werden, sind aus dem Stand der Technik bekannt. Die dazugehörigen Fördermittel sind zum Beispiel in Form von Förderwagen ausgestaltet. Derartige Fördereinrichtungen werden z. B. als Schwerkraftförderer ausgestaltet. Bei diesen Einrichtungen werden die Förderwagen über Mitnehmer auf ein höheres Förderniveau bewegt, von wo aus sich diese von der Schwerkraft angetrieben entlang der Führungsschiene bewegen. An die Förderwagen sind jeweils Förderorgane gekoppelt, welche die zu fördernden Stückgüter aufnehmen und diese entlang einer durch die Führungsschiene vorgegebene Förderstrecke fördern.

Die genannten Fördereinrichtungen weisen den Vorteil auf, dass die Förderwagen sowohl einzeln, d.h. unabhängig voneinander, als auch direkt oder indirekt miteinander gekoppelt in einem Verbund entlang einer Förderstrecke bewegt werden können. So können die Förderwagen beispielsweise über entsprechende Verbindungsschnittstellen direkt oder über kettengeführte Mitnehmer indirekt miteinander gekoppelt werden. Förderwagen, welche miteinander gekoppelt sind, erlauben z. B. eine taktsynchrone Förderung von Stückgütern.

Die EP 0856 480 B1 beschreibt ein schienengeführtes Fördermittel sowie eine Fördereinrichtung mit einer Mehrzahl von schienengeführten Fördermitteln. Das Fördermittel umfasst einen Förderwagen mit Laufrollen. Der Grundkörper des Förderwagens weist zwei Schenkel auf. An den einander zugeordneten Seiten der Wagenschenkel sind je zwei kreuzweise gegengleich versetzt angeordnete Laufrollen befestigt. Die Laufrollen sind in Verlaufrichtung der Wagenschenkel derart gegenseitig beabstandet angeordnet, dass eine flache Führungsschiene zwischen den Laufrollen Platz findet. Die Laufrollen rollen auf den beiden einander gegenüber liegenden Flachseiten ab.

Die Fördereinrichtung gemäss EP 0856 480 B1 weist jedoch den Nachteil auf, dass die Förderwagen an den beiden die Flachseiten miteinander verbindenden, seitlichen Verbindungsseiten nicht über Laufrollen geführt sind. Die Laufrollen weisen zwar jeweils einen Spurkranz auf, damit der Förderwagen auch bezüglich quer zur Förderrichtung wirkende Kräften weitgehend spielfrei an den Verbindungsseiten der Führungsschiene anliegt. Diese seitliche Führung ist jedoch mit vergleichsweise hoher Reibung und entsprechendem Verschleiss verbunden.

Die EP 1 169 249 B1 beschreibt ein Verfahren und eine Vorrichtung zur Stückgutförderung. Die Stückgüter werden auf Haltemittel geladen, von den Haltemittel gehalten gefördert und von den Haltemitteln entladen. Die Stückgüter werden quer zur Förderrichtung ist die Haltemittel oder aus den Haltemitteln geschoben. Die Haltemittel können hierzu geöffnet und geschlossen werden. Die Schiebebewegung erfolgt parallel zur Längsachse der Stückgüter über eine Gegenstandsführung.

Die Publikationsschrift EP 2 394 915 A1 beschreibt eine gattungsgemäße Maschine zum Befüllen und Verschliessen von Glasfläschchen. Die Maschine bildet eine Übergabezone aus, in welcher Glasfläschchen, welche mittels eines Schraubenförderers in eine Förderrichtung gefördert werden über einen Schiebermechanismus quer zur Förderrichtung an einen Kammförderer übergeben werden.

Die Aufgabe ist es, ein schienengeführtes Fördermittel und eine Fördereinrichtung mit einem schienengeführten Fördermittel der eingangs genannten Art zu schaffen, welche die oben genannten Nachteile behebt. Der Förderwagen und die dazugehörige Führungsschiene sollen insbesondere so ausgestaltet sein, dass die Führung ein auf den Förderwagen wirkendes Drehmoment aufnimmt, ohne dass übermässige Reibungskräfte auf die Bauteile und insbesondere auf die Laufrollen wirken. Ferner sollen die auf den Förderwagen wirkenden Kräfte möglichst gleichmässig auf die Laufrollen verteilt werden.

Die erste Aufgabe wird durch ein Fördermittel gelöst, welches sich dadurch auszeichnet, dass die Rotationsebenen der mindestens ersten, zweiten und dritten Laufrolle in einem Winkel von grösser 0° und kleiner 180° (Winkelgrade) relativ zueinander angeordnet sind. Das heisst die Rotationsebenen der ersten und zweiten, der zweiten und dritten sowie der ersten und dritten Rotationsebene sind jeweils im genannten Winkel relativ zueinander angeordnet.

Die Rotationsebenen sind bevorzugt in einem Winkel von 60° oder grösser, insbesondere von 90° oder grösser, vorteilhaft von 100° oder grösser und besonders bevorzugt von 115° oder grösser relativ zueinander angeordnet.

Die Rotationsebenen sind ferner bevorzugt in einem Winkel von 160° oder kleiner, insbesondere von 140° oder kleiner und vorteilhaft von 125° oder kleiner relativ zueinander angeordnet.

Die Rotationsebenen sind insbesondere in einem Winkel von 120° relativ zueinander angeordnet.

Die Rotationsebene der Laufrollen liegt definitionsgemäss parallel zur Rotationsrichtung der Laufrollen und führt durch deren Mittelebene. Die Drehachse der Laufrolle bildet entsprechend die Flächennormale der Rotationsebene aus.

Die Laufrollen bilden eine Drehachse aus. Die Laufrollen sind bevorzugt um eine physische Achse drehbar gelagert. Die Förderlast wird dabei bevorzugt über die physische Drehachse vom Fördermittel auf die Schienenführung übertragen. Die Lagerung der Laufrollen kann z. B. aus einem Kugellager bestehen.

Der Förderwagen kann auch zwei oder mehr als zwei erste und/oder zwei oder mehr als zwei zweite und/oder zwei oder mehr als zwei dritte Laufrollen aufweisen. Die Anzahl der Laufrollen hängt unter anderem auch von der zu erwarteten Traglast ab. Je höher die Traglast ist, desto mehr Rollen sind vorzugsweise vorzusehen, um die Last auf mehrere Rollen zu verteilen.

Die Rotationsebenen der ersten, zweiten und dritten Laufrollen schneiden sich in einem oben genannten Winkel relativ zueinander. Die Drehachsen der ersten, der zweiten und der dritten Laufrollen stehen in einem Winkel zueinander. Alle drei Drehachsen können auch in einer gemeinsamen Ebene quer zur Förderrichtung liegen.

Enthält der Förderwagen mehrere erste, zweite und/oder dritte Laufrollen auf, so weisen diese Laufrollen jeweils eine gemeinsame Rotationsebene auf.

Der Förderwagen beinhaltet insbesondere einen Grundkörper, an welchem die Laufrollen drehbar befestigt sind. Der Grundkörper bildet insbesondere eine in Förderrichtung betrachtet vordere Endfläche sowie eine hintere Endfläche aus.

Am Grundkörper, insbesondere an dessen Endflächen, können Dämpfungselemente angeordnet sein, welche Stösse beim Aufeinandertreffen zweier unabhängig voneinander bewegten Förderwagen dämpfen.

Gemäss einer Weiterbildung der Erfindung enthält der Förderwagen einen ersten und zweiten Wagenschenkel sowie einen die beiden Wagenschenkel miteinander verbindenden Verbindungsabschnitt.

Die beiden Wagenschenkel und der Verbindungsabschnitt bilden insbesondere den Grundkörper aus. Der Grundkörper ist insbesondere einteilig gefertigt. Der Grundkörper kann in Querschnittsansicht insbesondere Y-förmig ausgebildet sein.

Am ersten Wagenschenkel ist mindestens eine erste Laufrolle, am zweiten Wagenschenkel ist mindestens eine zweite Laufrolle und am Verbindungsabschnitt ist bevorzugt mindestens eine dritte Laufrolle drehbar gelagert angeordnet.

Am ersten Wagenschenkel können auch zwei oder mehr als zwei erste Laufrollen angeordnet sein. Die zwei oder mehr erste Laufrollen können in Förderrichtung des Förderwagens hintereinander angeordnet sein.

Am zweiten Wagenschenkel können ebenfalls zwei oder mehr als zwei zweite Laufrollen angeordnet sein. Die zwei oder mehr zweite Laufrollen können in Förderrichtung des Förderwagens hintereinander angeordnet sein.

Am Verbindungsabschnitt können auch zwei oder mehr als zwei dritte Laufrollen angeordnet sein. Die zwei oder mehr dritte Laufrollen können in Förderrichtung des Förderwagens hintereinander angeordnet sein.

Die Anordnung von zwei oder mehr ersten, zweiten und/oder dritten Laufrollen dient der Vermeidung eines Kippmomentes in Förderrichtung der unabhängig voneinander entlang einer Förderstrecke bewegten Förderwagen.

Die beiden Wagenschenkel und der Verbindungsabschnitt schliessen bevorzugt einen einseitig offenen Schienenaufnahmeraum zur Aufnahme eines Schienenkörpers ein. Die mindestens eine erste, zweite und dritte Laufrolle sind derart am Förderwagen angeordnet, dass diese am Schienenkörper, welcher durch den Schienenaufnahmeraum geführt ist, abrollen können.

Die mindestens eine erste, zweite und dritte Laufrolle sind bevorzugt derart am Förderwagen angeordnet, dass sich deren Rotationsebenen im Schienenaufnahmeraum schneiden.

Am Förderwagen ist bevorzugt ein Förderorgan zur Aufnahme bzw. Halterung eines Stückgutes angeordnet. Das Förderorgan kann über eine lösbare oder nichtlösbare Verbindung mit dem Förderwagen verbunden sein. Das Förderorgan ist bevorzugt über den Verbindungsabschnitt mit dem Förderwagen verbunden.

Das Förderorgan ist erfindungsgemäß eine Halteklammer. Die Halteklammer weist mindestens zwei Klammerschenkel zum klemmenden Halten des Stückgutes auf. Wenigstens ein Klammerschenkel, vorzugsweise beide Klammerschenkel sind bevorzugt beweglich. Die beiden Klammerschenkel sind insbesondere relativ zueinander beweglich.

Klemmendes Halten bedeutet, dass das Stückgut mittels einer Reib- und/oder Formschlussverbindung von der Halteklammer gehalten wird.

Die Halteklammer kann aktiv oder passiv betätigbar sein. Aktiv betätigbar heisst, dass die Halteklammer durch Bewegen der Klammerschenkel relativ zueinander über eine in die Förderanlage integrierte Steuerkulisse oder Schaltstation aktiv geöffnet und geschlossen werden kann. In diesem Fall kann die Halteklammer z. B. als Greifer ausgebildet sein.

Die Halteklammer ist bevorzugt passiv betätigbar. Passiv betätigbar heisst, dass die Halteklammer durch spreizen der Klammerschenkel, beispielsweise durch das zu fördernde Stückgut, passiv geöffnet und durch die Rückstellkraft der Klammerschenkel wieder passiv geschlossen werden kann. Die Halteklammer ist insbesondere so ausgestaltet, dass die Klammerschenkel in gespreizter Position eine Rückstellkraft in Richtung einer Ausgangsposition ausüben, welche das klemmende Haltern eines Stückgutes erlaubt.

Das Förderorgan kann jedoch auch ein Haltebeutel, eine Haltetasche, ein Haltesack, ein Haltehaken, ein Haltekorb, eine Haltekiste oder eine Halteplatte sein.

Hierzu können die Klammerschenkel federelastisch ausgebildet sein. Es kann jedoch auch ein Federelement vorgesehen sein, welches mit den Klammerschenkeln zusammenwirkt und auf diese eine Rückstellkraft ausübt.

Die Klammerschenkel bzw. die Halteklammer ist bevorzugt aus Federstahl gefertigt. Die Klammerschenkel bzw. die Halteklammer kann aber auch aus Kunststoff sein. Die Halteklammer ist bevorzugt einteilig ausgebildet.

Die Halteklammer zeichnet sich bevorzugt auch dadurch aus, dass die Klammerschenkel lediglich passiv betätigt werden. D.h., die Klammerschenkel werden durch das zwischen die Klammerschenkel eingeführte Stückgut betätigt. Die Klammerschenkel werden insbesondere nicht aktiv betätigt, z. B. durch eine Kulissenführung oder eine Schalteinrichtung.

Die Förderwagen sind insbesondere als unabhängige Förderorgane ausgebildet. Die Förderwagen sind insbesondere nicht miteinander verkettbar ausgebildet.

Am Förderwagen kann ein Kontaktelement zur Herstellung eines Mitnahme-Kontaktes mit einem Mitnehmer zwecks Mitnahme des Förderwagens durch den Mitnehmer angeordnet sein.

Das Kontaktelement kann z. B. als Zapfen ausgebildet sein. Der Zapfen ist so ausgelegt, dass dieser, wie weiter unten beschrieben, in Mitnahme-Kontakt mit einem Mitnehmer gebracht werden kann.

Die Erfindung gemäss der ersten Aufgabe betrifft auch eine Förderanlage, welche mindestens ein, vorzugsweise eine Mehrzahl von erfindungsgemässen Fördermitteln enthält.

Die Förderanlage zeichnet sich durch einen Schienenkörper aus, welcher mindestens einen Schienenkörperlängsabschnitt mit wenigstens drei am Aussenumfang des Schienenkörpers angeordneten Laufflächen für die mindestens eine erste, zweite und dritte Laufrolle ausbildet. Die Flächennormalen der wenigstens drei Laufflächen schneiden sich in einem Winkel von grösser 0° und kleiner 180° (Winkelgrade). Das heisst die Flächennormalen der ersten und zweiten, der zweiten und dritten sowie der ersten und dritten Lauffläche sind jeweils im genannten Winkel relativ zueinander angeordnet.

Die Flächennormalen der wenigstens drei Laufflächen schneiden sich bevorzugt in einem Winkel von 60° oder grösser, insbesondere von 90° oder grösser, vorteilhaft von 100° oder grösser und besonders bevorzugt von 115° oder grösser.

Die Flächennormalen der wenigstens drei Laufflächen schneiden sich ferner bevorzugt in einem Winkel von 160° oder kleiner, insbesondere von 140° oder kleiner und vorteilhaft von 125° oder kleiner.

Die Flächennormalen schneiden sich insbesondere in einem Winkel von 120°.

Die Laufflächen sind bevorzugt als Streifen ausgebildet. Die Streifen können Teil einer Ebene sein.

Gemäss einer bevorzugten Weiterbildung weist der Schienenkörperlängsabschnitt einen symmetrischen Querschnitt auf.

Gemäss einer bevorzugten Weiterbildung ist der Schienenkörperlängsabschnitt ein Mehrkantprofil, z. B. ein Dreikantprofil mit drei Profilflächen oder ein Sechskantprofil mit sechs Profilflächen, wobei die mindestens drei Laufflächen durch Profilflächen ausgebildet werden. Die Mehrkantprofile können als regelmässige, das heisst punktsymmetrische Profile ausgebildet sein.

Die Profilecken der Mehrkantprofile sind bevorzug abgerundet. Auf diese Weise wird die Verletzungsgefahr verringert.

Das Sechskantprofil kann im Querschnitt spiegelsymmetrisch oder punktsymmetrisch ausgebildet sein. Im letzteren Fall bildet das Sechskantprofil einen Profilquerschnitt in Form eines regelmässigen Sechsecks aus.

Das Sechskantprofil ist bevorzugt dergestalt, dass benachbarte Profilflächen jeweils in einem Winkel von 120° relativ zueinander angeordnet sind. Das Sechskantprofil weist folglich einen hexagonalen Querschnitt auf.

Die drei Laufflächen werden bevorzugt durch drei jeweils winklig, insbesondere in einem Winkel von 60°, zueinander angeordneten Profilflächen ausgebildet. Das heisst, die erste und zweite, die zweite und dritte sowie die dritte und erste Lauffläche schliessen jeweils den genannten Winkel ein.

Der Förderwagen fasst den Schienenkörper mit seinen beiden Wagenschenkeln seitlich ein bzw. umfasst diesen seitlich. Die mindestens eine erste, zweite und dritte Laufrolle sind auf den Laufflächen des Schienenkörpers rollend geführt. Die Laufrollen fassen den Schienenkörper bevorzugt praktisch spielfrei ein.

Da die Laufflächen am Aussenumfang des Schienenkörpers angeordnet sind und der Förderwagen mit seinen Laufrollen entsprechend am Aussenumfang des Schienenkörpers abrollt, spricht man auch von "Aussenläufer".

Der Schienenkörper und das bzw. die Fördermittel sind bevorzugt derart ausgebildet, dass ein auf das Fördermittel wirkendes Drehmoment gleichmässig über die mindestens eine erste, zweite und dritte Laufrolle verteilt auf den Schienenkörper abgeleitet wird.

Der Schienenkörper ist über Halterungsmittel, welche bevorzugt an einer der Profilflächen befestigt sind, mit einer Tragstruktur verbunden. Das Fördermittel ist daher bevorzugt solcherart ausgebildet, dass dieses wenigstens diese eine Profilfläche nicht umschliesst. Diese Profilfläche liegt zweckmässig zwischen den beiden Schenkelenden auf der offenen Seite des Förderwagens.

Die Querschnittsgeometrie des Schienenkörpers kann entlang der Förderstrecke gleichbleibend sein oder variieren. Das heisst, der Schienenkörper kann mehrere Schienenkörperlängsabschnitte mit unterschiedlichem Profilquerschnitt enthalten.

So kann der Schienenkörper beispielsweise einen weiteren Schienenkörperlängsabschnitt aufweisen, welcher als Rundprofil ausgebildet ist. Das Rundprofil weist bevorzugt einen kreisförmigen Querschnitt auf. Das Rundprofil schliesst bevorzugt an ein Sechskantprofil an. Bevorzugt geht das Sechskantprofil über einen Zwischenabschnitt mittels einer kontinuierlichen Querschnittsänderung in das Rundprofil über und umgekehrt.

Schienenkörperlängsabschnitt aus Rundprofilen können insbesondere in Kurvenbereichen eingesetzt werden, in welchen der Schienenkörper eine Biegung ausbildet.

Da die Laufrollen mit dem Rundprofil einen Linienkontakt ausbilden, können diese keine Drehmomente aufnehmen. Das heisst, die Fördermittel sind um den Schienenkörper schwenkbar. Dieser Effekt ist in Kurvenfahrten erwünscht, da hier je nach Fördergeschwindigkeit recht hohe Fliehkräfte auf die Fördermittel wirken. Je nach Schienenführung sind die Fliehkräfte derart gerichtet, dass diese ein Drehmoment auf die in die Kurve geführten Fördermittel ausüben.

Das Fördermittel kann nun in der Kurvenfahrt der Fliehkraft folgend ausschwenken. Dadurch wird vermieden, dass in Kurvenfahrten hohe Drehmomente auf die Fördermittel und insbesondere auf die Laufrollen wirken, was zu höherer Reibung und Verschleiss führt. Die Fördermittel werden durch die freie Ausrichtung in der Kurvenfahrt folglich wesentlich weniger stark belastet.

Wird beispielsweise in einer Biegung entlang der Förderstrecke ein Sechskantprofil verwendet, so sind die Fördermittel nicht in der Lage, ihre Ausrichtung der Fliehkraft folgend quer zum Schienenkörper zu verändern. Entsprechend wirken hohe Drehmomente auf die Laufrollen und führen zu Abrieb und Verschleiss der Lager. Der Schienenkörper kann im Anschluss an eine Kurve wieder in ein Sechskantprofil übergehen, entlang welchem die Fördermittel wieder drehmomentgesichert sind.

Der Schienenkörper kann ein Vollprofil sein. Der Schienenkörper kann insbesondere ein Hohlprofil sein. Das Hohlprofil kann z. B. ein Strangpressprofil sein. Der Schienenkörper kann aus Metall, wie Stahl oder Aluminium, oder aus Kunststoff sein.

Sind die Schienenkörper als Hohlprofile ausgebildet, so können zwei Schienenkörper über Steckverbindungen miteinander verbunden sein. Die Steckverbindung zwischen zwei Schienenkörpern kann ein Steckelement umfassen, welches in den Profilhohlraum der Steckkörper eingeführt ist und diese so miteinander verbindet. Die Verbindung kann eine Formschluss- und/oder Kraftschlussverbindung sein. Das Steckelement kann über seitlich durch die Profilwand des Schienenkörpers eingeführte Fixiermittel, wie Schrauben, im Profilhohlraum fixiert sein.

Der Schienenkörper weist bevorzugt eine Schlüsselweite von 10 bis 100 mm, vorzugsweise von 10 bis 50 mm, und insbesondere von 20 bis 30 mm auf. Die Schlüsselweite entspricht beim Sechskantprofil der Distanz zwischen zwei einander gegenüber liegenden Laufflächen. Die Schlüsselweite entspricht beim Rundprofil dem Aussendurchmesser des Profils. Die Schlüsselweite ist bevorzugt über die gesamte Längserstreckung des Schienenkörpers gleichbleibend. Die Schlüsselweite des Rundprofils entspricht bevorzugt der Schlüsselweite des Sechskantprofils.

Die Förderanlage ist bevorzugt als Hängeförderer ausgebildet, in welchem die Stückgüter wenigstens abschnittsweise hängend gefördert werden. Die Stückgüter werden entlang der Förderstrecke bevorzugt mehrheitlich hängend gefördert. In der hängenden Förderung sind der Verbindungsabschnitt und das Förderorgan bezogen auf die Schwerkraft unterhalb des Schienenkörpers angeordnet. Die beiden Wagenschenkel sind von unten seitlich am Schienenkörper vorbei nach oben geführt. Der Wagen ist entsprechend nach oben offen.

Die erfindungsgemässe Förderanlage kann z. B. als Schwerkraftförderer ausgelegt sein. Bei diesen Anlagen werden die Förderwagen von einem höheren Förderniveau (Potentialniveau) von der Schwerkraft angetrieben entlang der Führungsschiene nach unten auf ein tieferes Förderniveau (Potentialniveau) bewegt.

Die Förderwagen werden insbesondere unabhängig voneinander durch die Schwerkraft angetrieben.

Die Förderwagen können über Mitnehmer auf das höhere Förderniveau (Potential-niveau) bewegt werden.

Das Gefälle entlang der Schwerkraft-Förderstrecke kann z. B. 1° bis 45°, insbesondere 1° bis 15° (Winkelgrad) betragen.

Die Förderanlage ist insbesondere als Rundlauf ausgebildet. Der Rundlauf kann Verzweigungen enthalten. An den Verzweigungen sind insbesondere Weichen angeordnet. Die Förderwagen können auf diese Weise entlang unterschiedlicher Förderwege bewegt werden.

Gemäss einer Weiterführung der Erfindung enthält die Förderanlage ein Antriebsmittel. Das Antriebsmittel ist insbesondere ein flexibles und umlaufend ausgebildetes Antriebsorgan. Das Antriebsmittel kann z. B. eine Kette, ein Riemen, wie Zahnriemen, ein Seil, ein Band oder ein Gurt sein.

Mit dem Antriebsmittel sind bevorzugt Mitnehmer verbunden oder wirkverbunden. Die Mitnehmer enthalten ein Kontaktelement, über welches dieser mit dem Kontaktelement des Förderwagens in Kontakt gebracht werden kann. Das Kontaktelement kann auch direkt am Antriebsmittel angeordnet bzw. mit diesem wirkverbunden sein.

Das Antriebsmittel kann auch ein Schneckenrad eines Schneckenantriebes sein. Das Schneckenrad kann eine wendelförmig angeordnete Nut enthalten, in welche das Kontaktelement des Förderwagens eingreift. In diesem Fall entspricht die wendelförmige Nut dem Mitnehmer. Durch Drehen des Schneckenrades dreht sich die wendelförmige Nut. Auf diese Weise wird der Förderwagen zusammen mit dem in der wendelförmigen Nut verschiebbar geführten Kontaktelement entlang der Drehachse des Schneckenrades gefördert.

Das oben beschriebene Antriebsmittel mit Mitnehmer kann insbesondere in der Übergabezone Anwendung finden und entsprechend dort angeordnet sein. Das Antriebsmittel gewährleistet eine gleichmässige Bewegung der Förderwagen in die Übergabezone hinein und aus dieser heraus. Ferner gewährleistet das Antriebsmittel definierte Abstände zwischen den Förderwagen. Dies ist im Hinblick auf eine zuverlässige Übergabe der Stückgüter besonders wichtig.

Der Förderwagen enthält seinerseits, wie bereits erwähnt, ein Kontaktelement, welches mit dem Kontaktelement des Mitnehmers zur Herstellung eines Mitnahme-Kontaktes interagiert.

Die Kontaktelemente der Förderwagen und der Mitnehmer können derart ausgestaltet sein, dass diese eine Formschluss-, Kraftschluss- und/oder eine Reibschlussverbindung oder bloss einen Mitnahmekontakt zwischen Förderwagen und Mitnehmer herstellen.

Die Kontaktelemente können Kopplungselemente sein, über welche der Förderwagen mit dem Mitnehmer gekoppelt wird.

Das Kontaktelement am Förderwagen kann ein Zapfen sein. Das Kontaktelement am Mitnehmer kann aus zwei Mitnehmerarmen ausgebildet sein, welche einen Spalt zur Aufnahme des Zapfens ausbilden. Andere Kontaktelemente wie Magnete oder Klettverschluss sind auch möglich.

Das Fördermittel bzw. dessen Förderorgan ist bevorzugt zur Aufnahme von länglichen Stückgütern geeignet. Die länglichen Stückgüter weisen eine Längsachse auf. Die Stückgüter sind bevorzugt starr.

Die Stückgüter weisen bevorzugt eine rotationssymmetrische Form, vorzugsweise eine zylindrische Form, wie kreiszylindrische Form, auf. Die Stückgüter können zum Beispiel Vorformlinge, Kartuschen, Gläser, Flaschen, Büchsen, Kartonverpackungen, wie Kekskartons, Stangenware, wie Bonbons, Tuben oder Zigarren sein.

Die Erfindung betrifft eine Einrichtung zur Übergabe bzw. für den Transfer von Stückgütern an eine Förderanlage, welche wenigstens ein entlang einer Förderstrecke bewegbares Förderorgan zum Halten und Fördern eines Stückgutes enthält. Die Einrichtung enthält hierzu wenigstens eine Stückgutaufnahme zum Positionieren eines Stückgutes in einer Übergabe- bzw. Transferzone der Förderanlage.

Die Aufgabe ist es, eine oben genannte Einrichtung zu schaffen, welche möglichst einfach aufgebaut, robust und trotzdem zuverlässig im Betrieb ist. Ferner soll die Einrichtung mit möglichst geringem Steuerungsaufwand betrieben werden können.

Die Aufgabe wird durch die Merkmale nach Anspruch 1 gelöst.

Das dazugehörige erfindungsgemäss Verfahren zum Übergeben von Stückgütern an eine Förderanlage mittels der erfindungsgemässen Einrichtung enthält die folgenden Schritte:
- Bereitstellen mindestens eines Stückgutes in einer Stückgutaufnahme in der Übergabezone;
- Bewegen des mindestens einen Stückgutes aus der Stückgutaufnahme zum Förderorgan der Förderanlage hin;
- Übergeben des mindestens einen Stückgutes an das Förderorgan und Fördern des mindestens einen Stückgutes aus der Übergabezone.

Das Förderorgan übt dabei eine Haltekraft auf das Stückgut aus.

Das Verfahren zeichnet sich dadurch aus, dass das mindestens eine Stückgut mittels eines Schieberorgans eines Schiebermechanismus in einer Übergabebewegung quer zu seiner Längsachse aus der Stückgutaufnahme zum Förderorgan hin bewegt wird.

Das Stückgut wird ferner bevorzugt quer zur Förderrichtung der Stückgutaufnahme bzw. des Zwischenförderers und quer zur Förderrichtung der Förderanlage bewegt.

Das mindestens eine Stückgut wird durch die Übergabebewegung des Schieberorgans bevorzugt aus der Stückgutaufnahme zum Förderorgan hin geschoben.

Das mindestens eine Stückgut wird mittels des Schieberorgans bevorzugt aus einer Ruheposition in der Stückgutaufnahme zum Förderorgan hin bewegt. So wird das mindestens eine Stückgut bevorzugt in der Stückgutaufnahme in die Übergabezone gefördert und nimmt dort eine Ruhe- bzw. Warteposition ein. Die Übergabe findet aus der Ruheposition statt.

Es ist jedoch auch möglich, dass das mindestens eine Stückgut während seiner Förderung durch die Übergabezone übergeben wird. Das heisst, das Stückgut befindet sich in einer Bewegung in Förderrichtung B, wenn dieses durch den Schiebermechanismus aus der Stückgutaufnahme an das Förderorgan übergeben wird.

Das Schieberorgan kann z.B. durch Pneumatik- oder Hydraulikmittel bewegt werden. Das Schieberorgan kann auch über eine Exzentervorrichtung bewegt werden.

Das Schieberorgan kann auch über ein Schwenkelement bewegt werden. Dabei bewegt sich das Schieberorgan entlang einer kreisbogenförmigen Bahn. Das Schieberorgan führt eine kombinierte Bewegung aus, mit einer ersten Bewegungskomponente in Richtung des Förderorgans. Die zweite Bewegungskomponente ist bevorzugt in Förderrichtung des Förderorgans.

Das Schieberorgan kann eine lineare Bewegung, eine Schwenkbewegung oder eine kombinierte Bewegung ausführen. lineare Bewegung kann auch als Hubbewegung mit einem Vorhub zum Bewegen des Stückgutes zum Förderorgan hin, bzw. zum Einschieben des Stückgutes in das Förderorgan, und mit einem Rückhub zum Zurückbewegen des Schieberorgans in seine Ausgangsposition, sein.

Das Förderorgan enthält bevorzugt eine Halteklammer mit einem ersten und zweiten beweglichen Klammerschenkel, wie weiter oben bereits beschrieben.

Die Stückgutaufnahme ist bevorzugt Teil des Förderorgans eines Zwischenförderers, welcher die Stückgüter von einer Verarbeitungsvorrichtung, wie z. B. einer Abfüllanlage, in die Übergabezone fördert. Der Zwischenförderer ist z. B. als Rundlauf ausgebildet. Der Zwischenförderer kann z. B. ein Kettenförderer sein. Die Stückgutaufnahme kann insbesondere ein Förderorgan eines Fördermittels sein. Das Fördermittel kann z. B. ein Förderwagen enthalten. Das Fördermittel kann eine oder mehrere Förderorgane bzw. Stückgutaufnahmen enthalten.

Der Zwischenförderer fördert die Stückgüter bevorzugt batchweise bzw. chargenweise diskontinuierlich in die Übergabezone. Das heisst, zwischen zwei geförderten Chargen von Stückgütern wird eine Förderpause eingelegt. Ferner nehmen die Stückgüter in der Übergabezone während der Förderpause vor ihrer Übergabe bevorzugt eine Ruheposition ein.

Die Stückgüter werden bevorzugt als Charge in gleichbleibender Formation von den Stückgutaufnahmen an die Förderorgane übergeben.

Die Stückgutaufnahme bildet erfindungsgemäß ein Auflageelement aus, welchem das Stückgut durch die Schwerkraft bedingt aufliegt. Das Stückgut wird in der Stückgutaufnahme vorzugsweise nicht gehalten.

Die Stückgutaufnahme ist in der Übergabezone, bezogen auf die Richtung der Gravitationskraft, unterhalb des vorbei bewegten Förderorgans der Förderanlage angeordnet. Die Stückgutaufnahme kann in der Übergangszone jedoch auch seitlich vom vorbei bewegten Förderorgan angeordnet sein.

Gemäss einer bevorzugten Weiterbildung der Erfindung enthält die Einrichtung bzw. der Zwischenförderer eine Mehrzahl von Stückgutaufnahmen. Die Einrichtung ist hierbei zur gleichzeitigen Übergabe mehrerer Stückguter an Förderorgane der Förderanlage ausgelegt.

Die Einrichtung kann insbesondere eine Förderanlage sowie dazugehörige Fördermittel mit Förderorganen der oben beschriebenen Art enthalten. Bei den Stückgütern handelt es sich ebenfalls vorzugsweise um Stückgüter der oben beschriebenen Art.

Gemäss einer Weiterbildung der Erfindung wird das Förderorgan während der Übergabe des Stückgutes entlang seiner Förderstrecke weiter bewegt. Die Bewegung des Förderorgans bzw. dessen Fördermittels während der Übergabe ist bevorzugt kontinuierlich bzw. gleichförmig.

Es kann jedoch auch vorgesehen sein, dass das Förderorgan in der Übergabezone zwecks Übernahme des Stückgutes temporär angehalten oder in seiner Bewegung verlangsamt wird.

Gemäss einer Weiterbildung der Erfindung enthält das Förderorgan eine Halteklammer mit zwei beweglichen Klammerschenkeln. Die Klammerschenkel lassen sich auseinanderspreizen, wobei diese eine Rückstellkraft in Richtung Ausgangsposition ausüben. Das Stückgut wird gemäss dieser Weiterbildung durch das Schieberorgan in die Halteklammer gedrückt. Bei diesem Vorgang werden die Klammerschenkel auseinandergespreizt, so dass diese eine Rückstellkraft ausüben und das Stückgut klemmend in der Halteklammer halten. Die Halteklammer ist dabei so ausgelegt, dass das Stückgut die Klammerschenkel in der Halteposition auseinanderspreizt.

Gemäss einer Weiterbildung der Erfindung übt das bewegte Förderorgan während der Übernahme des Stückguts eine Mitnahmekraft auf das Stückgut aus. Ist das Förderorgan eine Halteklammer, so wird diese Mitnahmekraft auf das Stückgut ausgeübt, sobald dieses durch das Schieberorgan zwischen die Klammersc-henkel geschoben wird. Hierbei ist zu beachten, dass die Mitnahmekraft bereits auf das Stückgut ausgeübt wird, bevor sich dieses in der Halteposition am Förderorgan, d.h. zwischen den Klammerschenkel, befindet.

Die Mitnahmekraft bewirkt, dass das Stückgut einen Bewegungsimpuls in Bewegungsrichtung des Förderorgans der Förderanlage erhält und sich entsprechend in diese Förderrichtung bewegt, und zwar bereits bevor das Stückgut vom Förderorgan in seiner Halteposition gehalten wird.

In dieser Phase führt das Stückgut eine kombinierte Bewegung aus. Einerseits wird es vom Schieberorgan in Richtung Förderorgan bewegt. Andererseits wird das Stückgut durch die Mitnahmekraft bereits in Förderrichtung des Förderorgans bewegt.

Um dieser kombinierten Bewegung Rechnung zu tragen, bildet das Schieberorgan bevorzugt eine Führungsfläche, welche in Bewegungsrichtung des Förderorgans in der Übergabezone verläuft. Das Stückgut gleitet nun während der Übernahme durch die Mitnahmekraft des Förderorgans entlang dieser Führungsfläche in Bewegungsrichtung des Förderorgans. Die Führungsfläche ist hierzu vorzugsweise als Gleitfläche ausgebildet. Die Gleitfläche kann z. B. mit einem Material, wie PTFE, beschichtet sein, welches einen geringen Reibungskoeffizienten aufweist.

Durch diese Massnalune wird gewährleistet, dass das Schieberorgan das Stückgut vollständig in die Halteposition des Förderorgans schieben kann, ohne die durch die Mitnahmekraft ausgelöste Bewegung des Stückgutes in Förderrichtung des Förderorgans zu behindern.

Die Führungsfläche des Schieberorgans wird bevorzugt durch ein sich in Bewegungsrichtung des Förderorgans erstreckendes Bauteil ausgebildet.

Gemäss einer Weiterbildung der Erfindung bewegt das Schieberorgan das Stückgut von unten nach oben zum Förderorgan hin. Gemäss dieser Ausführung befindet sich das Förderorgan in der Übergabezone in einer hängenden Förderung.

Es ist jedoch auch möglich, dass das Schieberorgan das Stückgut in einer Seitwärtsbewegung zum Förderorgan hin bewegt. Das Schieberorgan führt das Stückgut bevorzugt während der gesamten Übergabe. Das Schieberorgan fixiert bzw. haltert das Stückgut zu diesem Zwecke jedoch vorzugsweise nicht. Daher sind das Schieberorgan und der Übergabeprozess vorzugsweise so ausgelegt, dass das Stückgut während der geführten Übergabe durch Unterstützung der Schwerkraft dem Schieberorgan bzw. dessen Führungsfläche anliegt.

Gemäss einer Weiterbildung des Verfahrens werden mittels des Schiebermechanismus mehrere Stückgüter gleichzeitig zu Förderorganen der Förderanlage hin bewegt und von diesen übernommen. Hierzu enthält die Vorrichtung eine entsprechende Anzahl Stückgutaufnahmen. Die Stückgutaufnahmen können als unabhängige Fördermittel oder Teil eines einzelnen Fördermittels, insbesondere eines Zwischenförderers, sein.

Die Förderanlage enthält eine entsprechende Anzahl Fördermittel mit Förderorganen. Die Förderorgane werden derart koordiniert in die Übergabezone bewegt, dass bei der Übergabe jeder Stückgutaufnahme ein Förderorgan zugeordnet ist.

Gemäss einer Weiterbildung der Erfindung werden mehrere Stückgüter mittels eines gemeinsamen Schieberorgans gleichzeitig, d.h. taktsynchron, an die Förderorgane übergeben.

So können beispielsweise gemäss einer besonderen Weiterbildung der Erfindung in einer Verarbeitungsvorrichtung pro Verarbeitungstakt jeweils mehrere Stückgüter gleichzeitig einem Verarbeitungsschritt unterzogen werden. Die Stückgüter werden nach Abschluss des Verarbeitungsschrittes in Stückgutaufnahmen mittels Zwischenförderer vorzugsweise gemeinsam zur Übergabezone gefördert. In der Übergabezone werden die Stückgüter mittels des Schiebermechanismus gleichzeitig, d.h. taktsynchron, zu den Förderorganen der Förderanlagen hin bewegt und diesen übergeben.

Die Übergabe der Stückgüter erfolgt folglich batchweise. Da die Stückgüter jeweils den Förderorganen einzelner Fördermittel übergeben werden, können diese in der

Förderanlage individuell, batchweise oder in einem kontinuierlichen Förderstrom gefördert werden,

Die Förderanlage und der Schiebermechanismus und gegebenenfalls auch die Verarbeitungsvorrichtung sowie gegebenenfalls auch ein Zwischenförderer werden bevorzugt über eine gemeinsame Steuerungseinrichtung gesteuert und taktsynchron betrieben.

Das erfindungsgemässe Fördermittel sowie die dazugehörige Förderanlage sind einfach und robust gebaut und erlauben einen zuverlässigen und störungsfreien Übergabe- und Förderbetrieb. Der Wartungsaufwand ist entsprechend gering. Ferner ist die Förderanlage kostengünstig in der Herstellung, da z. B. die Schienenkörper aus Standardprofilen sind, welche im freien Handel erhältlich sind.

Da die Förderwagen voneinander unabhängig entlang einer Förderstrecke bewegbar sind, können diese z. B. über Weichensysteme entlang von individuellen und von anderen Förderwagen unabhängigen Förderstrecken bewegt werden.

Die individualisierte Förderung einzelner Produkte in einer Förderanlage eröffnet daher viele Möglichkeiten bei der Kommissionierung von Produkten. So lassen sich die einzelnen Förderwagen auch zu Gruppen zusammenfassen ohne jedoch die Förderwagen miteinander zu verketten. Ferner erlaubt die erfindungsgemässe Förderanlage auch eine Pufferung der Förderwagen und somit der geförderten Produkte.

Es ist augenscheinlich, dass sich ein Kettenförderer nicht als Schwerkraftförderer mit den oben genannten Eigenschaften eignet.

Die Einrichtung zur Übergabe von Stückgütern zeichnet sich ebenfalls durch einen vergleichsweise einfachen und robusten Aufbau aus. Die Einrichtung ist steuerungstechnisch einfach ausgelegt und im Betrieb entsprechend zuverlässig, kaum störungsanfällig und wartungsarm.

Da die Stückgüter während der Übergabe durch den Schiebermechanismus quer zu ihrer Längsachse bewegt werden, kann die Einrichtung sehr kompakt und platzsparend gebaut werden. So lassen sich insbesondere der Zwischenförderer und die Förderanlage in der Übergabezone vergleichsweise nahe aneinander vorbeiführen.

Im Folgenden wird der Erfindungsgegenstand anhand eines bevorzugten Ausführungsbeispiels, welches in den beiliegenden Zeichnungen dargestellt ist, näher erläutert. Es zeigen jeweils schematisch:
- Figur 1:: eine perspektivische Ansicht eines schienengeführten Fördermittels;
- Figur 2:: eine Seitenansicht des schienengeführten Fördermittels nach Figur 1;
- Figur 3:: eine Frontansicht des schienengeführten Fördermittels nach Figur 1;
- Figur 4:: eine Querschnittansicht des schienengeführten Fördermittels nach Figur 1 im Bereich einer Querschnittänderung des Schienenkörpers;
- Figur 5:: eine Seitenansicht eines Schienenkörpers;
- Figur 6:: eine Querschnittansicht des schienengeführten Fördermittels nach Figur 1;
- Figur 7:: eine Seitenansicht der Förderanlage aus dem Bereich der Schienenführung;
- Figur 8:: eine Einrichtung zur Übergabe von Stückgütern;
- Figur 9 bis 13:: jeweils eine Seitenansicht der Einrichtung im Bereich der Übergabezone;
- Figur 14 bis 16:: jeweils eine Frontansicht der Einrichtung gemäss Figur 9 bis 13;
- Figur 17:: eine Frontansicht eines schienengeführten Fördermittels mit einem Schienenkörper gemäss einer weiteren Ausführungsform;
- Figur 18:: eine Frontansicht eines schienengeführten Fördermittels mit einem Schienenkörper gemäss einer weiteren Ausführungsform;
- Figur 19 bis 22:: jeweils eine Seitenansicht einer weiteren Ausführungsform eines Schiebermechanismus;

- Figur 23:: eine Querschnittsansicht durch eine weitere Ausführungsform eines Schienenkörpers;
- Figur 24:: eine perspektivische Ansicht einer weiteren Ausführungsform eines Fördermittels.

Grundsätzlich sind in den Figuren gleiche Teile mit gleichen Bezugszeichen versehen. Für das Verständnis der Erfindung sind gewisse Merkmale in den Figuren nicht dargestellt. Die beschriebenen Ausführungsbeispiele stehen beispielhaft für den Erfindungsgegenstand und haben keine beschränkende Wirkung.

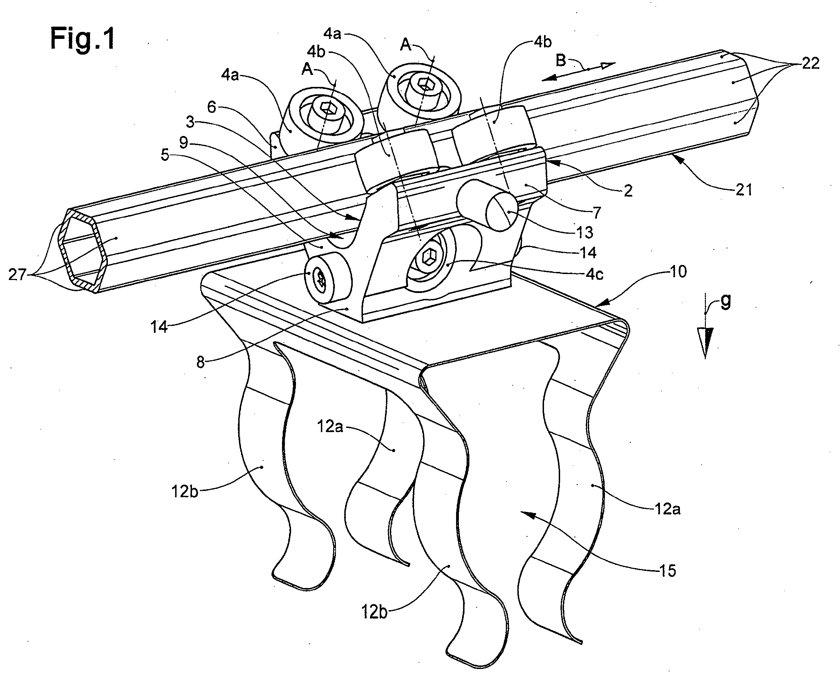

Das Fördermittel 2 gemäss Figur 1 bis 4 und 6 bis 13 enthält einen als Aussenläufer auf einem Schienenkörper 21 geführten Förderwagen 3. Der Förderwagen 3 weist einen Grundkörper 5 mit einem ersten und zweiten Wagenschenkel 6, 7 auf, welche über einen Zwischenabschnitt 8 miteinander verbunden sind.

Am Endabschnitt des ersten Wagenschenkels 6 ist ein Paar von ersten Laufrollen 4a drehbar gelagert angeordnet. Am Endabschnitt des zweiten Wagenschenkels 7 ist ein Paar von zweiten Laufrollen 4b drehbar gelagert angeordnet. Die Laufrollen 4a, 4b der genannten Laufrollenpaare sind jeweils in Förderrichtung B hintereinander angeordnet. Ihre Drehachsen bzw. Rotationsebenen sind parallel zueinander. Die paarweise Anordnung von ersten und zweiten Laufrollen 4a, 4b soll ein Verkippen des Fördermittels 2 in Förderrichtung B verhindern.

Am Verbindungsabschnitt 8 ist eine einzelne dritte Laufrolle 4c drehbar gelagert angeordnet. Die Rotationsebenen R der ersten, zweiten und dritten Laufrollen 4a, 4b, 4c schneiden sich im Schienenaufnahmeraum in einem Winkel von 120°.

Durch den Schienenaufnahmeraum 9 ist gemäss Figur 1 ein Schienenkörper 21 in Form eines symmetrischen Sechskantprofils geführt. Das Sechskantprofil 21 bildet sechs, gleichmässig um den Profilumfang angeordnete Profilflächen 22 aus. Diese formen ein gleichmässiges Sechseck. Diese Profilflächen 22 sind als Laufflächen für die Laufrollen 4a, 4b, 4c geeignet. Die Laufrollen 4a, 4b, 4c liegen jedoch jeweils nur drei der insgesamt sechs möglichen Profilflächen 22 auf. Diese drei Laufflächen 27 schliessen jeweils gegenseitig einen Winkel von 60° ein. Das heisst, die erste und zweite, die zweite und dritte sowie die dritte und erste Lauffläche 27 schliessen einen Winkel von 60° ein. Der Schienenkörper 21 wird von den Laufrollen annähernd spielfrei eingefasst.

Das Sechskantprofil 21 weist eine Schlüsselweite SW auf, welche der Distanz zwischen zwei gegenüber liegenden Profilflächen entspricht.

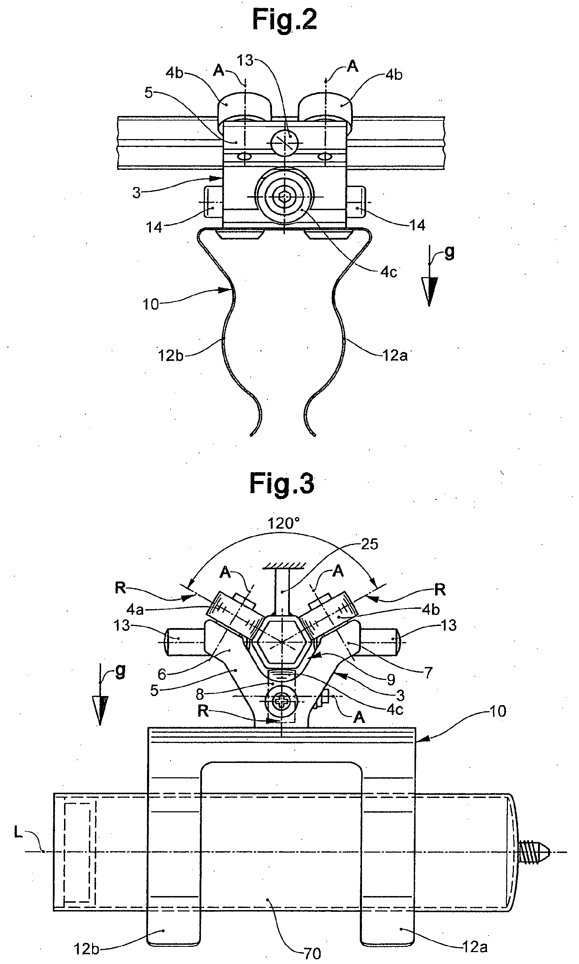

Der Schienenkörper 21 ist über eine Halterung 25 mit einer an dieser Stelle nicht näher erläuterten Tragstruktur verbunden (Figur 3). Die Halterung 25 ist an der Profilfläche 22 des Schienenkörpers 21 angebracht, welche der Öffnung zwischen den beiden Wagenschenkel 6, 7 zugewandt ist.

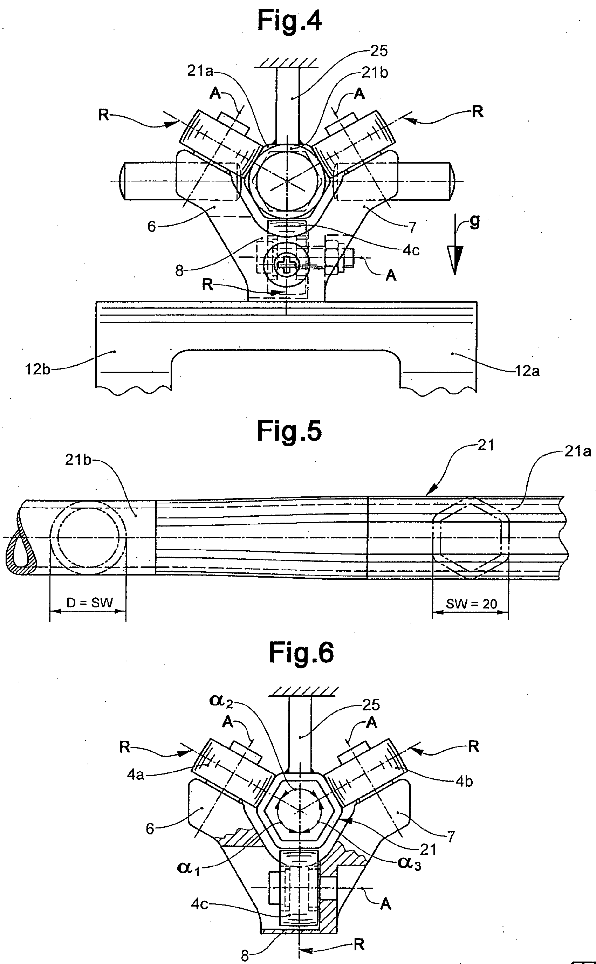

Der Schienenkörper 21 kann abschnittsweise auch als Rundprofil ausgebildet sein (siehe Figur 4 und 5). Die Schlüsselweite des Rundprofils entspricht dessen Aussendurchmesser D. Daher lassen sich die drei Laufrollen bzw. Laufrollenpaarungen 4a, 4b, 4c auch am Rundprofil spielfrei führen. Der Rundprofilabschnitt 21 b bildet jedoch für die Laufrollen im Gegensatz zum Sechskantprofilabschnitt 21a keine Führungsfläche sondern eher eine Führungslinie aus. Im Gegensatz zum Sechskantprofilabschnitt 21a ist daher das Fördermittel 2 am Rundprofilabschnitt 21b nicht drehmomentgesichert. Das heisst, das Fördermittel 2 ist quer zur Förderrichtung B bzw. quer zur Längsrichtung des Schienenkörpers 21, um den Schienenkörper 21 schwenkbar.

Das Förderorgan 10 ist in der hängenden Förderung unterhalb des Schienenkörpers 21 angeordnet. Die beiden Wagenschenkel 6, 7 sind von unten seitlich am Schienenkörper 21 vorbei nach oben geführt. Die Rotationsebene R der ersten und zweiten Laufrollen 4a, 4b verläuft von schräg oben zur Lauffläche des Schienenkörpers 21 hin. Die beiden Laufflächen 27 für die beiden ersten und zweiten Laufrollen 4a, 4b sind schräg nach unten gerichtet.

Die Rotationsebene R der dritten Laufrollen 4c ist senkrecht angeordnet. Die dritte Laufrolle 4c rollt oberhalb des Schienenkörpers 21 an einer nach oben gerichteten Lauffläche 27 ab.

Am Verbindungsabschnitt 8 ist ein vom Schienenkörper 21 weg weisendes Förderorgan 10 lösbar angeordnet. Das Förderorgan 10 ist als Halteklammer ausgebildet. Die Halteklammer 10 weist ein Paar von ersten Klammerschenkeln 12a und ein Paar von zweiten Klammerschenkeln 12b auf, welche einen Aufnahmebereich 15 einschliessen.

Die Halteklammer 10 ist aus Federstahl gebildet. Die Schenkelpaarungen 12a, 12b sind entsprechend federelastisch, und vermögen ein Stückgut 70 durch Ausübung einer Rückstellkraft klemmend zu halten. Hierzu ist die Halteklammer 10 derart ausgelegt, dass das Stückgut 70 die Klammerschenkel 12a, 12b in der Halteposition zumindest leicht spreizt. Das Stückgut 70 wird radial, d.h. am Aussenradius klemmend gehalten.

Seitlich am ersten und zweiten Wagenschenkel 6, 7 ist jeweils ein quer zur Längsrichtung des Schienenköipers 21 abstehender Führungszapfen 13 angeordnet (siehe Figur 1).

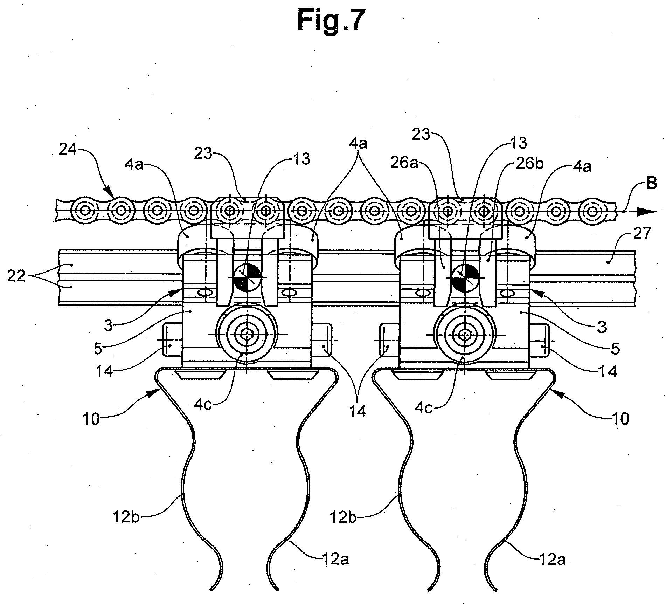

Die Förderanlage 1 enthält ferner eine Antriebskette 24 sowie an der Antriebskette befestigte Mitnehmer 23. Die Mitnehmer 23 werden über die Antriebskette aktiv angetrieben. Die Mitnehmer 23 weisen jeweils zwei voneinander beabstandete Mitnehmerarme 26a, 26b auf. Die Mitnehmerarme 26a, 26b bilden einen Zwischenraum aus, in welchen der Mitnehmer den Führungszapfen 13 aufnimmt (siehe Figur 7).

Soll nun das Fördermittel 2 z. B. auf ein höheres Förderniveau geführt werden, so wird ein Mitnehmer 23 dem Führungsmittel 2 zugeführt, wobei der Führungszapfen 13 zwischen die beiden Mitnehmerarme 26a, 26b geführt wird. Der Förderwagen 3 wird nun vom Mitnehmer 23 über die durch die Mitnehmerarme 26a, 26b auf den Führungszapfen 13 wirkende Antriebskraft mitgeführt.

Die Förderwagen 3 enthalten im Weiteren in Förderrichtung betrachtet auf der Vorder- und Rückseite Dämpfungselemente 14, welche Stösse beim Zusammentreffen zweier unabhängig voneinander bewegten Fördermittel dämpft. Die Dämpfungselemente 14 können Zapfen aus gummielastischem Material sein.

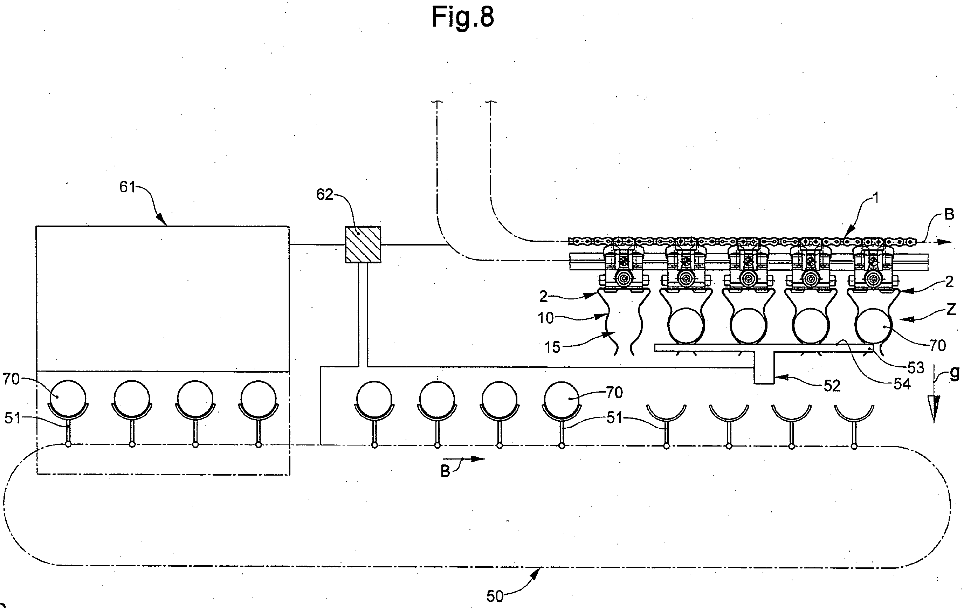

Die Figur 8 zeigt schematisch eine Einrichtung zur Übergabe von Stückgütern 70, insbesondere kreiszylinderförmige Kartuschen, an eine Förderanlage 1 der oben beschriebenen Art.

Die Einrichtung enthält eine Verarbeitungsvorrichtung 61, z. B. eine Abfüllvorrichtung. Ferner enthält die Einrichtung eine Förderanlage 1 zum Fördern der Stückgüter 70 zu einer Weiterverarbeitungsvorrichtung, wie z.B. zu einer Verpackungsvorrichtung (nicht gezeigt). Die Einrichtung enthält im Weiteren einen Zwischenförderer 50, welcher die Stückgüter 70 von der Verarbeitungsvorrichtung 61 zur Übergabezone Z an der Förderanlage 1 fördert.

In der Verarbeitungsvorrichtung 61 werden in der Art eines Batch-Betriebes immer mehrere Stückgüter 70, hier z. B. deren vier, gleichzeitig einem Verarbeitungsschritt unterzogen, z. B. mit einem Inhalt, wie Dichtmasse, befüllt. Die Verarbeitung geschieht im Taktbetrieb. Die Stückguter 70 werden nach Abschluss des Verarbeitungsschrittes Stückgutaufnahmen 51 des Zwischenförderers 50 zugeführt. Die Stückgutaufnahmen 51 sind in Förderrichtung B hintereinander angeordnete Förderorgane des Zwischenförderers 50.

Die Stückgutaufnahmen 51 mit den Stückgütern 70 werden mittels Zwischenförderer 50 in die Übergabezone Z der Förderanlage 1 gefördert. Der Zwischenförderer 50 ist als Rundlauf ausgebildet, welcher die Stückgutaufnahmen 51 nach erfolgter Übergabe der Stückgüter 70 an die Förderanlage 1 wieder zurück zur Verarbeitungsvorrichtung 61 bewegt.

Der Zwischenförderer 50 fördert die Stückgüter 70 batchweise bzw. chargenweise diskontinuierlich in die Übergabezone Z. Das heisst, zwischen zwei geförderten Chargen von Stückgütern 70 wird eine Förderpause eingelegt. Ferner nehmen die Stückgüter 70 in der Übergabezone Z während der Förderpause vor ihrer Übergabe eine Ruheposition ein.

Die Chargen von Stückgütern 70 werden bevorzugt in einem regelmässigen Takt in die Übergabezone Z gefördert.

In der Übergabezone Z ist ein pneumatisch betriebener Schiebermechanismus 52 mit einem Schieberorgan 53 angeordnet. Das Schieberorgan 53 umfasst ein sich in Förderrichtung B der Fördermittel 2 erstreckendes Bauteil mit einer längsgerichteten Führungsfläche für die Stückgüter 70.

Die Förderstrecke der Förderanlage 1 führt durch die Übergabezone Z. Entsprechend werden Fördermittel 2 mit Halteklammern 10 durch die Übergabezone Z bewegt. Die Stückgüter 70 werden getaktet und batchweise der Übergabezone Z zugeführt.

Die Förderanlage 1 und die dazugehörigen Fördermittel 2 wurden bereits im Zusammenhang mit den Figuren 1 bis 7 ausführlich beschrieben. Es wird auf die entsprechenden Ausführungen weiter oben verwiesen.

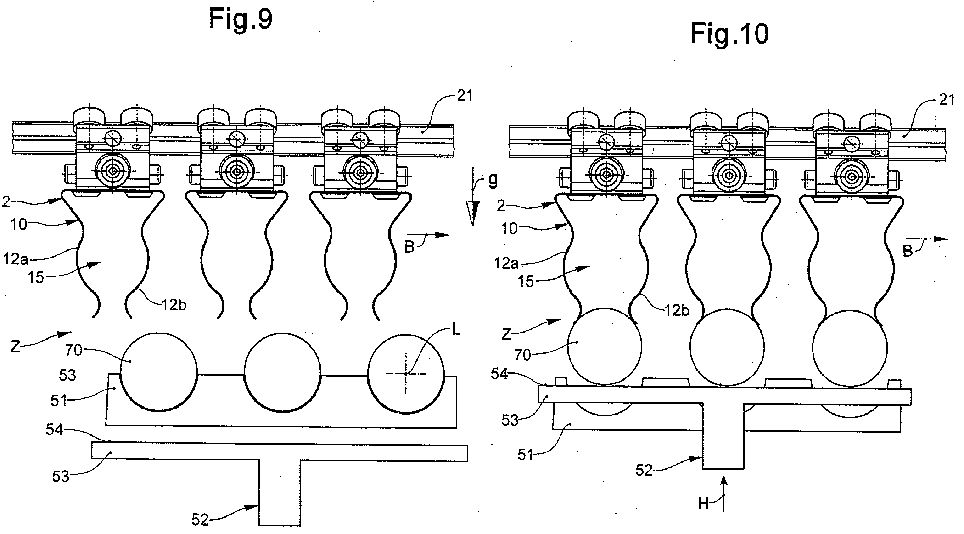

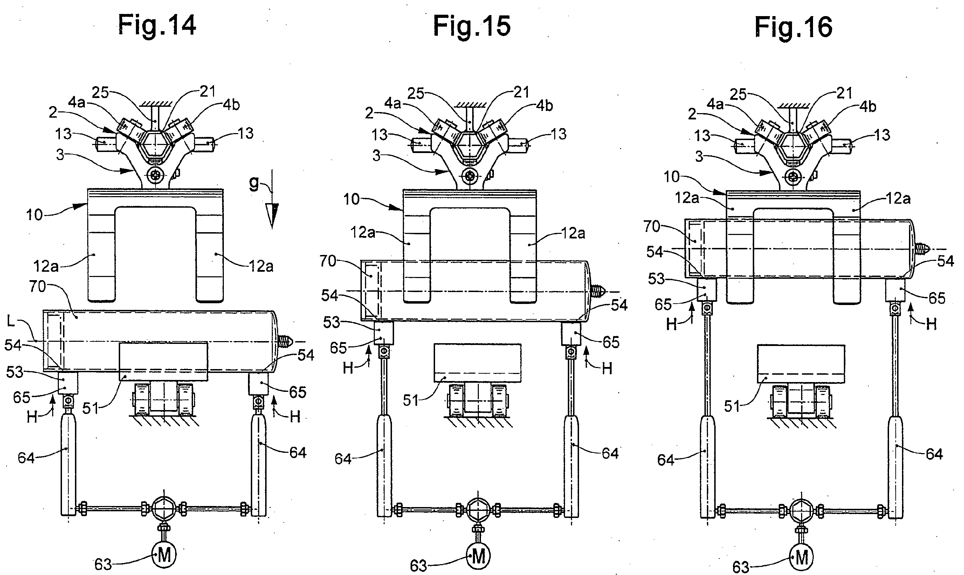

Die Figuren 9 bis 13 zeigen die batchweise Übergabe von Stückgütern an die Förderanlage 1 in Seitenansichten. Die Figuren 14 bis 16 zeigen die Übergabe von Stückgütern 70 an die Förderanlage 1 gemäss den Figuren 9 bis 13 in Frontansichten.

Die Übergabe geschieht getaktet, wobei. die Übergabe gemäss den Figuren 9 bis 13und 14 bis 16 einem Übergabetakt entspricht.

Die Verarbeitungsvorrichtung 61, der Zwischenförderer 50, die Förderanlage 1 und letztlich die Übergabe der Stückgüter 70 werden zueinander taktsynchron betrieben.

Die Figur 9 und 14 stellen den Beginn eines Übergabetaktes zur Übergabe einer Gruppe von drei Stückgütern 70 an die Förderanlage 1 dar. Die zu übergebenden drei Stückgüter 70 liegen in der Übergabezone Z in drei Stückgutaufnahmen 51 zur Übergabe in Ruheposition bereit. Die Anzahl Stückgüter 70 kann selbstverständlich auch grösser oder kleiner sein und zum Beispiel deren zwei, vier oder fünf betragen.

Die Stückgutaufnahmen 51 sind Teil von Rollen geführten Förderorganen eines hier nicht näher dargestellten Zwischenförderers (siehe Figur 14 bis 16).

Fördermittel 2 mit jeweils einer Halteklammer 10 werden von der Förderanlage 1 in die Übergabezone Z bewegt. Im vorliegenden Fall sind es drei Fördermittel 2, d.h. für jedes bereit liegende Stückgut 70 ein Fördermittel 2.

Während die Fördermittel 2 durch die Übergabezone Z bewegt werden, wird das Schieberorgan 53 des Schiebermechanismus 52 in einer Linearbewegung H nach oben bewegt (Figur 10). Die Stückgüter 70 werden mittels des Schieberorgans 53 gemeinsam nach oben in Richtung der durch die Übergabezone Z bewegten Halteklammern 10 angehoben. Die Bewegung des Schieberorgans 53 ist derart auf die Bewegung der Halteklammer 10 abgestimmt, dass die nach oben bewegten Stückgüter 70 mit den Klammeröffnungen der Halteklammern 10 zusammentreffen und durch fortgesetzte Bewegung des Schieberorgans 53 in die Halteklammern 10 der Fördermittel 2 geschoben werden.

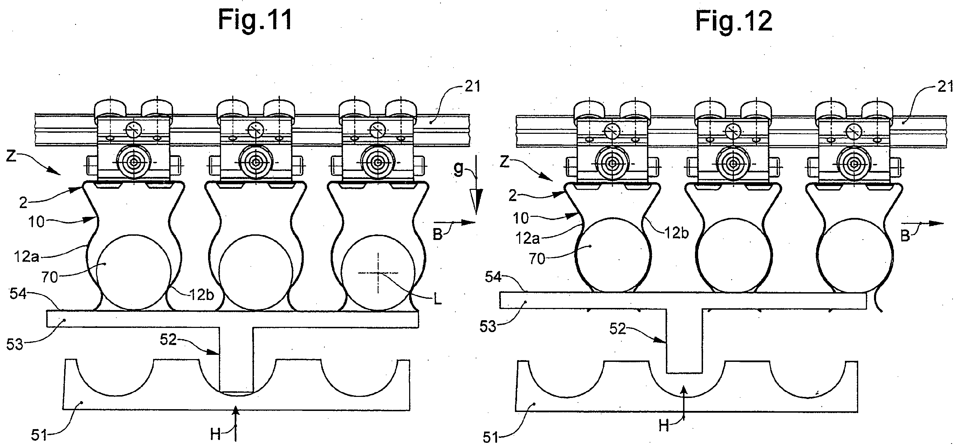

Sobald die Stückgüter 70 auf die Klammeröffnung der Halteklammern 10 treffen und in Kontakt mit der Halteklammer 10 kommen, übt das Fördermittel 2 über die Halteklammer 10 eine Mitnahmekraft auf die Stückgüter 70 aus (Figur 10). Da jedoch das Schieberorgan 53 seine Bewegung nach oben fortführt, um die Stückgüter 70 vollständig in die Halteposition in der Halteklammer 10 zu schieben, bewegen sich die Stückgüter 70 relativ zum Schieberorgan 53 in Bewegungsrichtung B der Fördermittel 2 (Figur 11, 12 und 15).

Bei diesem Vorgang gleiten die Stückgüter 70 in Bewegungsrichtung B auf dem Schieberorgan 53.

Das Schieberorgan 53 enthält zwei in Abstand zueinander verlaufende Schieberbalken 65. Die Schieberbalken 65 sind in Bewegungsrichtung B der Fördermittel 2 ausgerichtet und bilden eine Führungsfläche 54 aus, welche gleichzeitig auch eine Gleitfläche für die Stückgüter 70 ist.

Die Schieberbalken 65 sind beidseits der Aufnahme 51, aus welcher die Stückgüter 70 zwecks Übergabe durch das Schieberorgan 53 gehoben werden, angeordnet. Die Schieberbalken 65 werden über Pneumatikzylinder 64 zur Übergabe der Stückgüter 70 angehoben und zur Einnahme der Ausgangsposition der Schieberbalken 65 wieder abgesenkt. Die Pneumatikzylinder 64 werden entsprechend aus- bzw. eingefahren. Das Aus- und Einfahren der Pneumatikzylinder 64 geschieht über einen entsprechenden Steuerantrieb 63. Der Steuerantrieb 63 wird über die Steuerungseinrichtung 62 gesteuert.

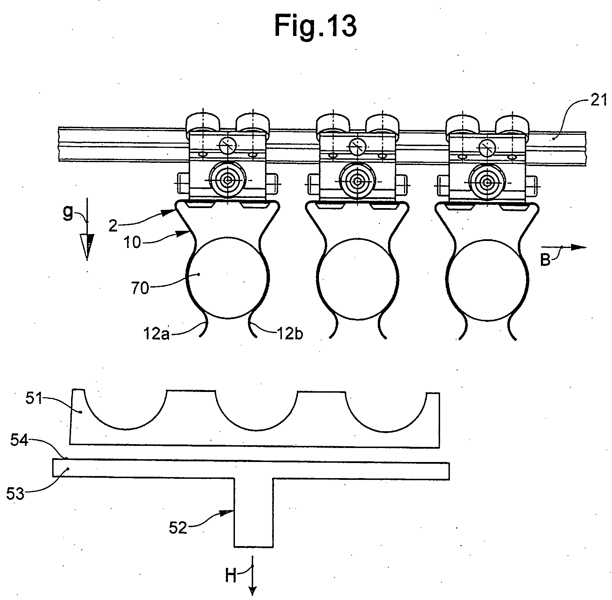

Sobald die Stückgüter 70 durch das Schieberorgan 53 in die Halteposition in den Halteklammern 10 geschoben worden sind, bewegt sich das Schieberorgan 53 in einer Linearbewegung H wieder nach unten in seine Ausgangsposition zurück (Figur 13). Mit Erreichen der Ausgangsposition kann ein neuer Übergabetakt eingeleitet werden. Hierzu werden über den Zwischenförderer 50 Stückgutaufnahmen 51 mit Stückgütern 70 in die Übergabezone Z bewegt und in eine Ruhe- bzw. Warteposition für die Übergabe gebracht.

Die übergebenen Stückgüter 70 werden durch die Fördermittel 2 in Förderrichtung B entlang der Förderstrecke der Förderanlage 1 gefördert.

Die Abfülleinrichtung 61, der Zwischenförderer 50, der Schiebermechanismus 52 sowie die Förderanlage 1 werden bevorzugt über eine gemeinsame Steuerungseinrichtung 62 gesteuert und taktsynchron betrieben.

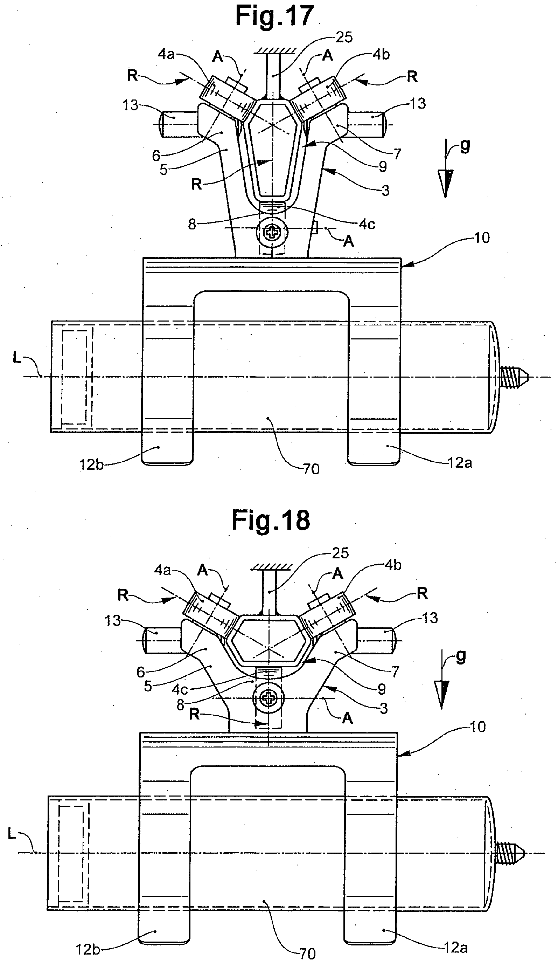

Die Figuren 17 und 18 zeigen jeweils Frontansichten eines schienengeführten Fördermittels gemäss eines weiteren Ausführungsbeispiels. Das Fördermittel 2 entspricht im wesentlichen dem Fördermittel 2 gemäss Figur 1 bis 3, weswegen an dieser Stelle auf eine Wiederholung der Beschreibung gleicher Merkmale verzichtet wird. Es wird vielmehr auf die Beschreibung zu Figur 1 bis 3 verwiesen.

Die Ausführungsform gemäss Figur 17 und 18 unterscheidet sich von der Ausführungsform nach Figur 1 bis 3 lediglich durch die unterschiedliche Ausgestaltung des Schienenkörpers und daher auch durch die unterschiedliche Anordnung der Laufrollen 4a, 4b, 4c am Förderwagen 3.

Der Schienenkörper 81 gemäss Figur 17 ist ebenfalls als Sechskantprofil ausgebildet. Die sechs Profilflächen sind jedoch nicht gleich lang ausgebildet. Der Profilquerschnitt ist im vorliegenden Ausführungsbeispiel vielmehr in die Länge gezogen. Entsprechend ist das Sechskantprofil lediglich spiegelsymmetrisch ausgebildet. Die drei Profilflächen, welche Laufflächen ausbilden, sind jedoch ebenfalls jeweils in einem Winkel von 60° relativ zueinander angeordnet. Entsprechend sind die Rotationsebenen R der Laufrollen auch hier in einem Winkel von 120° relativ zueinander angeordnet.

Der Schienenkörper 82 gemäss Figur 18 ist ebenfalls als Sechskantprofil ausgebildet. Die sechs Profilflächen sind jedoch auch hier nicht gleich lang ausgebildet. Der Profilquerschnitt ist im vorliegenden Ausführungsbeispiel vielmehr in die Breite gezogen. Entsprechend ist das Sechskantprofil auch hier lediglich spiegelsymmetrisch ausgebildet. Die drei Profilflächen, welche Laufflächen ausbilden, sind jedoch ebenfalls jeweils in einem Winkel von 60° relativ zueinander angeordnet. Entsprechend sind die Rotationsebenen R der Laufrollen auch hier in einem Winkel von 120° relativ zueinander angeordnet.

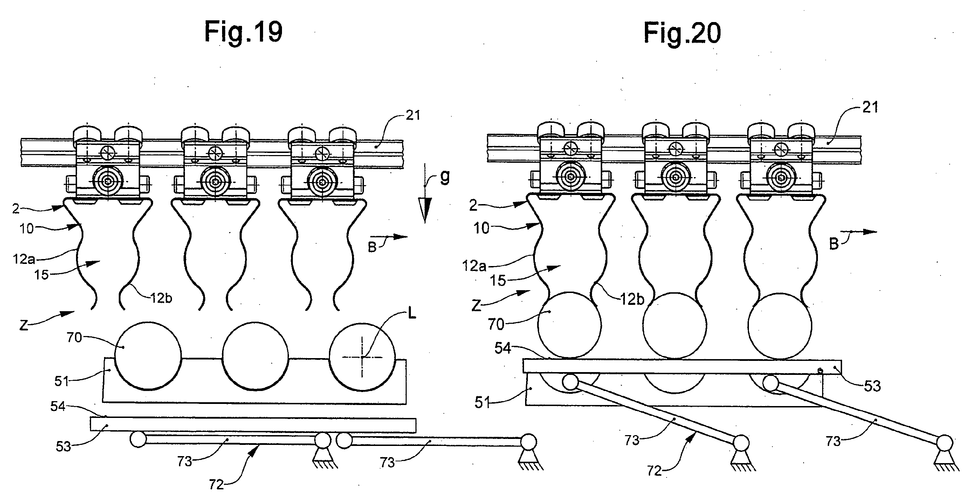

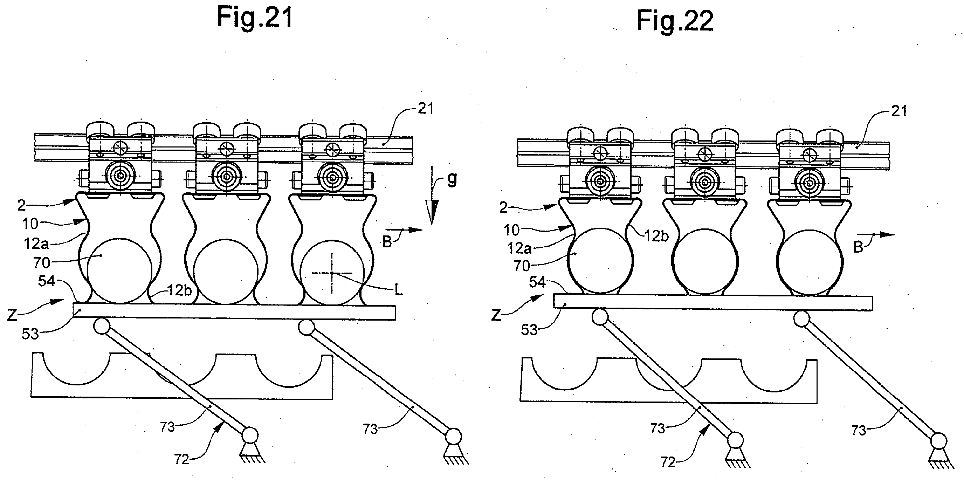

Die Figuren 19 bis 22 zeigen die Übergabe von Stückgütern 70 an die Förderanlage in Frontansichten, wobei als einziger Unterschied zum Ausführungsbeispiel nach Figur 11 bis 16 ein Schiebermechanismus 72 gemäss einer weiteren Ausführungsform vorliegt. Es wird daher an dieser Stelle lediglich der Aufbau und die Funktionsweise des Schiebermechanismus 72 beschrieben. Bezüglich der gemeinsamen Merkmale wird auf die Beschreibung zu den Figuren 11 bis 16 verwiesen.

Der Schiebermechanismus 72 enthält zwei Schwenkelemente 73 and deren distalen Enden das Schieberorgan 53 angebracht ist. Das Schieberorgan 53 wird durch die Schwenkbewegung der Schwenkelemente 73 entlang einer Kreisbogenbahn in einer kombinierten Bewegung mit einer ersten Bewegungskomponente nach oben in Richtung Förderorgane 10 und mit einer zweiten Bewegungskomponente seitwärts in Förderrichtung B der Förderorgane 10 bewegt. Die zwecks Übergabe durch das Schieberorgan 53 aus den Stückgutaufnahmen 51 zu den Förderorganen 10 hin bewegten Stückgüter 70 führen entsprechend eine analoge Bewegung aus.

Die zusätzliche seitliche Bewegung des Schieberorgans 53 in Förderrichtung B des Förderorgans 10 während des Anhebens des Stückgutes 70 unterstützt die Übergabe des Stückgutes 70, welches durch die Mitnahmekraft des Förderorgans 10 in Förderrichtung B eine analoge, seitlich Bewegung ausführt.

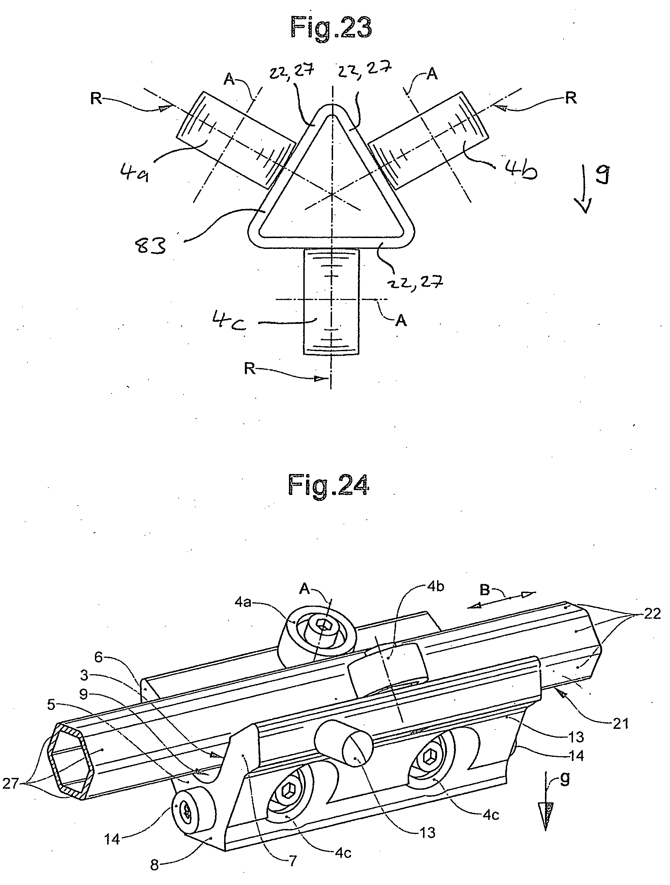

Der Schienenkörper 83 gemäss Figur 23 ist als Dreiecksprofil ausgebildet. Das Dreiecksprofil bildet in Querschnittsansicht ein gleichseitiges Dreieck aus. Entsprechend sind die drei Profilflächen 22, welche gleichzeitig die drei Laufflächen 27 für die Laufrollen 4a, 4b, 4c ausbilden, in einem Winkel von 60° zueinander angeordnet.

Der Förderwagen 3 gemäss Figur 24 unterscheidet sich vom Förderwagen 3 gemäss Figur 1 bis 3 dadurch, dass im Verbindungsabschnitt 8 zwischen den beiden Wagenschenkeln 6, 7 zwei dritte Laufrollen 4c in Förderrichtung B hintereinander angeordnet sind. Diese beiden Laufrollen 4c stellen sicher, dass der Förderwagen 3 in Förderrichtung B nicht verkippen kann. Der Förderwagen 3 ist ohne Förderorgan dargestellt.

Demgegenüber ist am ersten und zweiten Wagenschenkel 6, 7 jeweils nur eine erste und zweite Laufrolle 4a, 4b angeordnet.

## Patentansprüche

1. Einrichtung mit einer Förderanlage (1) und einer Vorrichtung zur Übergabe von Stückgütern (70) an die Förderanlage (1),
**dadurch gekennzeichnet, dass**
die Förderanlage (1) mindestens eine entlang einer Förderstrecke bewegbare - Halteklammer (10) zum Fördern eines Stückgutes (70) enthält, wobei die Vorrichtung mindestens eine in einer Übergabezone (Z) unterhalb der mindestens einen Halteklammer (10) angeordnete Stückgutaufnahme (51) zum Positionieren und Bereitstellen mindestens eines Stückgutes (70) in der Ubergabezone (Z) der Förderanlage (1) enthält, wobei die Stückgutaufnahme (51) eine Auflage ausbildet, und wobei das mindestens eine Stückgut (70) der Auflage durch die Schwerkraft bedingt aufliegen kann, und die Vorrichtung einen Schiebermechanismus (52) mit mindestens einem Schieberorgan (53) enthält, mittels welchem das mindestens eine Stückgut (70) in einer Übergabebewegung aus der Stückgutaufnahme (51) zur Halteklammer (10) bewegt und der Halteklammer (10) übergeben werden kann.

2. Einrichtung gemäss Anspruch 1, **dadurch gekennzeichnet, dass** das Schieberorgan (53) eine in Bewegungsrichtung (B) der mindestens einen Halteklammer (10) in der Übergabezone (Z) verlaufende Führungsfläche (54) enthält, wobei die Führungsfläche (54) vorzugsweise als Gleitfläche ausgebildet ist.

3. Einrichtung gemäss Anspruch 1 oder 2, **dadurch gekennzeichnet, dass** die mindestens eine Halteklammer mindestens einen beweglichen Klammerschenkel (12a, 12b) enthält.

4. Einrichtung gemäss einem der Ansprüche 1 bis 3, **dadurch gekennzeichnet, dass** die Vorrichtung einen Zwischenförderer (50) umfasst und die Stückgutaufnahme (51) Teil eines Förderorgans des Zwischenförderers (50) ist, welcher die Stückgüter (70) von einer Verarbeitungsvorrichtung (61) in die Übergabezone (Z) fördert.

5. Verfahren zum Übergeben von Stückgütern (70) an eine Förderanlage (1) mittels einer Einrichtung gemäss den Ansprüchen 1 bis 4, **gekennzeichnet durch** folgende Schritte:
- Bereitstellen mindestens eines Stückgutes (70) in einer Stückgutaufnahme (51) in der Übergabezone (Z);
- Bewegen des mindestens einen Stückgutes (70) aus der Stückgutaufnahme (51) zur Halteklammer (10) der Förderanlage (1) hin;
- Übergeben des mindestens einen Stückgutes (70) an die Halteklammer (10) und Fördern des mindestens einen Stückgutes (70) aus der Übergabezone (Z), wobei das mindestens eine Stückgut (70) mittels eines Schieberorgans (53) eines Schiebermechanismus (52) in einer Übergabebewegung aus der Stückgutaufnahme (51) quer zu seiner Längsachse (L) zur Halteklammer (10) hin bewegt und der Halteklammer (10) übergeben wird.

6. Verfahren gemäss Anspruch 5, **dadurch gekennzeichnet, dass** das mindestens eine Stückgut (70) durch die Übergabebewegung des Schieberorgans (53) aus der Stückgutaufnahme (51) zur Halteklammer (10) hin geschoben wird.

7. Verfahren gemäss Anspruch 5 oder 6, **dadurch gekennzeichnet, dass** das mindestens eine Stückgut (70) mittels des Schieberorgans (53) in einer Übergabebewegung aus einer Ruheposition in der Stückgutaufnahme (51) zur Halteklammer (10) hin bewegt wird.

8. Verfahren gemäss einem der Ansprüche 5 bis 7, **dadurch gekennzeichnet, dass** die Übergabebewegung des Schieberorgans (53) eine lineare Bewegung, eine Schwenkbewegung oder eine Kombination davon ist.

9. Verfahren gemäss einem der Ansprüche 5 bis 8, **dadurch gekennzeichnet, dass** die mindestens eine Halteklammer (10) während der Übergabe des Stückgutes (70) entlang seiner Förderstrecke bewegt wird.

10. Verfahren gemäss einem der Ansprüche 5 bis 9, **dadurch gekennzeichnet, dass** das Förderorgan (10) eine Halteklammer mit mindestens einem beweglichen Klammerschenkel (12a, 12b) enthält, und das Stückgut (70) durch das Schieberorgan (53) in die Halteklammer (10) gedrückt wird und von den Klammerschenkeln (12a, 12b) klemmend gehalten wird.

11. Verfahren gemäss einem der Ansprüche 5 bis 10, **dadurch gekennzeichnet, dass** die während der Übernahme des Stückguts (70) entlang der Förderstrecke bewegte Halteklammer (10) eine Mitnahmekraft auf das Stückgut (70) ausübt, und das Stückgut (70) während der Übernahme entlang einer Führungsfläche (54) des Schieberorganes (53) gleitet.

12. Verfahren gemäss einem der Ansprüche 5 bis 11, **dadurch gekennzeichnet, dass** das Schieberorgan (53) das Stückgut (70) von unten nach oben zur Halteklammer (10) hin bewegt.

13. Verfahren gemäss einem der Ansprüche 5 bis 12, **dadurch gekennzeichnet, dass** mittels des Schiebermechanismus (52) mehrere Stückgüter (70) gleichzeitig zu jeweils einer Halteklammer (10) der Förderanlage (1) hin bewegt und von diesen übernommen werden.

14. Verfahren gemäss Anspruch 13, **dadurch gekennzeichnet, dass** die Stückgüter (70) mittels eines gemeinsamen Schieberorgans (53) an die Halteklammern (10) übergeben werden.

15. Verfahren gemäss Anspruch 13 oder 14, **dadurch gekennzeichnet, dass** in einer Verarbeitungsvorrichtung (61) jeweils mehrere Stückgüter (10) einem Verarbeitungsschritt unterzogen werden, und die Stückgüter (10) nach Abschluss des Verarbeitungsschrittes gemeinsam zur Übergabezone (Z) gefördert werden, und die Stückgüter (70) mittels des Schiebermechanismus (52) gleichzeitig zu den Halteklammern (10) der Förderanlage (1) hin bewegt und diesen übergeben werden.

## Claims

1. A setup with a conveying installation (1) and a device for the transfer of piece goods (70) to the conveying installation (1),
**characterised in that**
the conveying installation (1) comprises at least one holding clip (10) which is movable along a conveying path and is for conveying a goods piece (70), wherein the device comprises at least one goods piece receiver (51), which is arranged in a transfer zone (Z) below the at least one holding clip (10) for positioning and providing at least one goods piece (70) in the transfer zone (Z) of the conveying installation (1), wherein the goods piece receiver (51) forms a rest, and wherein the at least one goods piece (70) is able to lie on the rest due to gravity,
and the device comprises a slide mechanism (52) with at least one slide element (53), by way of which the at least one goods piece (70) can be moved in a transfer movement out of the goods piece receiver (51) to the holding clip (10) and be transferred to the holding clip (10).

2. A setup according to claim 1, **characterised in that** the slide element (53) comprises a guide surface (54) which runs in the movement direction (B) of the at least one holding clip (10) in the transfer zone (Z), wherein the guide surface (54) is preferably designed as a sliding surface.

3. A setup according to claim 1 or 2, **characterised in that** the at least one holding clip (10) comprises at least one movable clip limb (12a, 12b).

4. A setup according to one of the claims 1 to 3, **characterised in that** device comprises an intermediate conveyor (50) and the goods piece receiver (51) is part of a conveying element of the intermediate conveyor (50) which conveys the piece goods (70) from a processing device (61) into the transfer zone (Z).

5. A method for transferring piece goods (70) to a conveying installation (1) by way of a setup according to the claims 1 to 4, **characterised by** the following steps:
- providing at least one goods piece (70) in a goods piece receiver (51) in the transfer zone (Z);
- moving the at least one goods piece (70) out of the goods piece receiver (51), to the holding clip (10) of the conveying installation (1);
- transferring the at least one goods piece (70) to the holding clip (10) and conveying the at least one goods piece (70) out of the transfer zone (Z), wherein the at least one goods piece (70), by way of a slide element (53) of a slide mechanism (52), is moved in a transfer movement out of the goods piece receiver (51) transversely to its longitudinal axis (L) to the holding clip (10) and is transferred to the holding clip (10).

6. A method according to claim 5, **characterised in that** the at least one goods piece (70), by way of the transfer movement of the slide element (53), is pushed out of the goods piece receiver (51) to the holding clip (10).

7. A method according to claim 5 or 6, **characterised in that** the at least one goods piece (70), by way of the slide element (53), is moved in a transfer movement out of its idle position in the goods piece receiver (51) to the holding clip (10).

8. A method according to one of the claims 5 to 7, **characterised in that** the transfer movement of the slide element (53) is a linear movement, a pivot movement or a combination thereof.

9. A method according to one of the claims 5 to 8, **characterised in that** the at least one holding clip (10) is moved along its conveying path during the transfer of the goods piece (70).

10. A method according to one of the claims 5 to 9, **characterised in that** the conveying element (10) comprises a holding clip with at least one movable clip limb (12a, 12b), and the goods piece (70) is pressed by the slide element (53) into the holding clip (10) and is clampingly held by the clip limbs (12a, 12b).

11. A method according to one of the claims 5 to 10, **characterised in that** the holding clip (10) which is moved along the conveying path during the take-over of the goods piece (70) exerts a driving (taking-along) force onto the goods piece (70), and the goods piece (70) slides along a guide surface (54) of the slide element (53) during the take-over.

12. A method according to one of the claims 5 to 11, **characterised in that** the slide element (53) moves the goods piece (70) upwards from below, to the holding clip (10).

13. A method according to one of the claims 5 to 12, **characterised in that** several piece goods (70) by way of the slide mechanism (52), are simultaneously moved in each case to a holding clip (10) of the conveying installation (1) and are taken over by this element.

14. A method according to claim 13, **characterised in that** the piece goods (70) are transferred to the holding clips (10) by way of a common slide element (53).

15. A method according to claim 13 or 14, **characterised in that** in each case several piece goods (10) are subjected to a processing step in a processing device (61), and the piece goods (10) after completion of the processing step are commonly conveyed to the transfer zone (Z), and the piece goods (70) by way of the slide mechanism (52) are moved simultaneously to the holding clips (10) of the conveying installation (1) and are transferred to these.

## Revendications

1. Dispositif présentant une installation de transport (1) et un ensemble pour transférer une à une des pièces (70) de produit à l'installation de transport (1), **caractérisé en ce que**
l'installation de transport (1) contient au moins une pince de retenue (10) apte à être déplacée le long d'un parcours de transport et transportant une pièce (70) de produit,
**en ce que** l'ensemble contient au moins un logement (51) à pièce de produit disposé dans une zone de transfert (Z) située en dessous de la ou des pinces de retenue (10) et qui positionne et prépare au moins une pièce (70) de produit dans la zone de transfert (Z) de l'installation de transport (1),
**en ce que** le logement (51) à pièce de produit forme un appui et la ou les pièces (70) de produit peuvent être placées sur le support sous l'action de la force de gravité,
**en ce que** l'ensemble contient un mécanisme (52) à poussoir présentant au moins un organe de poussée (53) au moyen duquel la ou les pièces (70) de produit se déplacent dans un déplacement de transfert hors du logement (51) à pièce de produit et en direction de la pince de retenue (10) et peuvent être transférées à la pince de retenue (10).

2. Dispositif selon la revendication 1, **caractérisé en ce que** l'organe de poussée (53) contient une surface de guidage (54) qui s'étend dans la direction de déplacement (B) de la ou des pinces de retenue (10) dans la zone de transfert (Z), la surface de guidage (54) étant configurée de préférence comme surface coulissante.

3. Dispositif selon les revendications 1 ou 2, **caractérisé en ce que** la ou les pinces de retenue contiennent au moins une branche mobile de pince (12a, 12b).

4. Dispositif selon l'une des revendications 1 à 3, **caractérisé en ce que** l'ensemble comporte un transporteur intermédiaire (50) et **en ce que** le logement (51) à pièce de produit fait partie d'un organe de transport du transporteur intermédiaire (50) qui transporte les pièces (70) de produit depuis un ensemble de traitement (61) jusque dans la zone de transfert (Z).

5. Procédé pour transférer des pièces (70) de produit sur une installation de transport (1) au moyen d'un dispositif selon les revendications 1 à 4, **caractérisé par** les étapes suivantes :
délivrer au moins une pièce (70) de produit dans un logement (51) à pièce de produit situé dans la zone de transfert (Z);
déplacer la ou les pièces (70) de produit hors du logement (51) à pièce de produit vers la pince de retenue (10) de l'installation de transport (1);
transférer la ou les pièces (70) de produit à la pince de retenue (10) et transporter la ou les pièces (70) de produit hors de la zone de transfert (Z), la ou les pièces (70) de produit étant déplacées vers la pince de retenue (10) au moyen d'un organe de poussée (53) d'un mécanisme (52) à poussoir, dans un déplacement de transfert hors du logement (51) à pièce de produit, transversalement par rapport à l'axe longitudinal (L) de ce dernier, et étant transférées à la pince de retenue (10).

6. Procédé selon la revendication 5, **caractérisé en ce que** la ou les pièces (70) de produit sont déplacées dans le déplacement de transfert de l'organe de poussée (53) hors du logement (51) à pièce de produit jusque dans la pince de retenue (10).

7. Procédé selon les revendications 5 ou 6, **caractérisé en ce que** la ou les pièces (70) de produit sont déplacées au moyen de l'organe de poussée (53) dans un déplacement de transfert depuis une position de repos dans le logement (51) à pièce de produit jusque dans la pince de retenue (10).

8. Procédé selon l'une des revendications 5 à 7, **caractérisé en ce que** le déplacement de transfert de l'organe de poussée (53) est un déplacement linéaire, un déplacement de pivotement ou une combinaison de ces déplacements.

9. Procédé selon l'une des revendications 5 à 8, **caractérisé en ce que** la ou les pinces de retenue (10) sont déplacées le long de leur parcours de transport pendant le transfert de la pièce (70) de produit.

10. Procédé selon l'une des revendications 5 à 9, **caractérisé en ce que** l'organe de transport (10) contient une pince de retenue qui présente au moins une branche mobile (12a, 12b) de pince et **en ce que** la pièce (70) de produit est repoussée par l'organe de poussée (53) jusque dans la pince de retenue (10) et est maintenue de manière serrée par les branches (12a, 12b) de la pince.

11. Procédé selon l'une des revendications 5 à 10, **caractérisé en ce que** la pince de retenue (10) déplacée le long du parcours de transport pendant le transfert de la pièce (70) de produit exerce sur la pièce (70) de produit une force d'entraînement et **en ce que** pendant le transfert, la pièce (70) de produit glisse le long d'une surface de guidage (54) de l'organe de poussée (53).

12. Procédé selon l'une des revendications 5 à 11, **caractérisé en ce que** l'organe de poussée (53) déplace la pièce (70) de produit du bas vers le haut en direction de la pince de retenue (10).

13. Procédé selon l'une des revendications 5 à 12, **caractérisé en ce qu'**au moyen du mécanisme de poussée (52), plusieurs pièces (70) de produit peuvent être déplacées simultanément chacune vers une pince de retenue (10) de l'installation de transport (1) et être reprises par ces dernières.

14. Procédé selon la revendication 13, **caractérisé en ce que** les pièces (70) de produit sont transférées aux pinces de retenue (10) au moyen d'un organe de poussée (53) commun.

15. Procédé selon les revendications 13 ou 14, **caractérisé en ce que** plusieurs pièces (10) de produit subissent une étape de traitement dans un ensemble de traitement (61) et **en ce qu'**après l'étape de traitement, les pièces (10) de produit sont transportées conjointement vers la zone de transfert (Z), les pièces (70) de produit étant déplacées simultanément vers les pinces de retenue (10) de l'installation de transport (1) au moyen du mécanisme de poussée (52) et étant transférées aux pinces de retenue (10).
